# FASCICULE DE BREVET EUROPEEN

(11) **EP 0 543 721 B1**
(45) Date de publication et mention de la délivrance du brevet: **18.12.1996**
(21) Numéro de dépôt: 92403093.5
(22) Date de dépôt: 18.11.1992
(51) Int. Cl.: F16D 23/14

(54) **Butée d'embrayage comportant une plaque d'appui métallique et son procédé de fabrication**
Mit einer metallischen Abstützplatte versehenes Kupplungsausrücklager und Verfahren zu seiner Herstellung
Clutch release bearing with a metallic push-plate and method of making the same

(30) Priorité: 19.11.1991 FR 9114241
(43) Date de publication de la demande: 26.05.1993
(73) Titulaire: SKF FRANCE, F-92142 Clamart Cédex (FR)
(72) Inventeur: Delos, Jacques, F-77500 Chelles (FR); Caron, Fabrice, F-78210 Montigny le Bretonneux (FR)
(74) Mandataire: Casalonga, Axel

(56) Documents cités:
- DE-A- 3 543 105
- FR-A- 2 073 107
- FR-A- 2 224 019
- FR-A- 2 613 794
- FR-A- 2 636 694
- GB-A- 1 171 498
- GB-A- 1 210 948
- GB-A- 2 117 476
- US-A- 4 561 788

## Description

La présente invention concerne les butées d'embrayage, du type à autocentrage, fonctionnant ou non en contact permanent avec un élément du diaphragme du mécanisme d'embrayage d'un véhicule automobile.

Ce type de butée d'embrayage comprend un palier à roulement dont la bague tournante vient en contact de façon continue ou intermittente avec un élément du diaphragme du mécanisme d'embrayage. Le palier à roulement est monté par l'intermédiaire de moyens d'autocentrage sur une douille de guidage qui supporte le palier à roulement et qui assure en outre son guidage axial le long d'un tube-guide solidaire de la boîte de vitesses lors des manoeuvre de débrayage et d'embrayage.

Les moyens d'autocentrage interposés entre la douille de guidage et la bague non tournante du palier à roulement permettent à la butée de s'autocentrer par rapport au diaphragme avec lequel elle vient en contact.

La douille de guidage est généralement munie d'une partie tubulaire servant au montage du palier à roulement et au guidage de la butée sur le tube-guide. Une collerette radiale ayant sensiblement la forme d'un disque plan sert d'appui à l'action d'un organe de manoeuvre de la butée. La collerette radiale peut également servir au guidage du palier à roulement dans un plan radial lors de l'autocentrage.

Les douilles de guidage de ce type sont généralement réalisées par moulage d'une matière synthétique chargée de fibres de verre. Pour limiter l'usure à l'endroit du contact entre l'organe de manoeuvre et la collerette radiale de la douille de guidage, on interpose généralement entre les extrémités dudit organe de manoeuvre et la partie en matière synthétique moulée de la collerette radiale, une plaque d'appui métallique réalisée par exemple en acier durci par traitement thermique.

La solidarisation de la plaque d'appui et de la douille de guidage est habituellement réalisée par différents moyens tels que rivetage, encliquetage par l'intermédiaire de moyens élastiques intégrés à la douille. On peut également envisager de surmouler la matière synthétique sur la plaque d'appui métallique elle-même après que celle-ci ait subi un éventuel traitement thermique de durcissage nécessaire.

On connaît par le document FR A 2 224 019 une butée d'embrayage comprenant un palier à roulement, un organe de montage en matière synthétique, des moyens d'autocentrage et un élément de manoeuvre contre lequel vient agir un organe de manoeuvre de la butée. Le manchon de centrage est muni d'une partie circulaire en forme de soufflet déformable axialement et radialement. L'élément de manoeuvre est fixé sur le manchon de centrage par collage, clipsage ou par surmoulage dans des trous de forme appropriée.

Ces différents moyens de solidarisation présentent cependant des inconvénients

C'est ainsi que le surmoulage de la douille de guidage sur la plaque d'appui impose pratiquement un chargement manuel des inserts constituant les futures plaques d'appui dans le moule de fabrication de la douille de guidage avant la fermeture du moule et l'injection de la matière synthétique ce qui implique un coût supplémentaire non négligeable. De plus, les plaques métalliques ayant subi un traitement thermique sont souvent déformées par celui-ci, et présentent par exemple des défauts de planéité de faible amplitude. La fermeture du moule redresse provisoirement ces plaques métalliques qui se redéforment ensuite lors de l'ouverture du moule ce qui a pour effet d'engendrer des contraintes résiduelles dans la matière synthétique de la douille de guidage entraînant des déformations locales de celle-ci. On note, par exemple, l'apparition de défauts d'ovalisation de l'alésage de la partie tubulaire de la douille de guidage ce qui peut avoir des conséquences néfastes lors du fonctionnement de la butée d'embrayage.

La fixation de la plaque d'appui par encliquetage élastique est difficile à réaliser, en raison de l'élasticité relativement réduite de la matière synthétique chargée de fibres de verre qui constitue la douille de guidage et des faibles dimensions des organes élastiques imposées par l'encombrement réduit alloué par le constructeur automobile. On constate fréquemment des ruptures des organes élastiques dans un tel mode de fixation.

On connaît par le document FR A 2 613 794 une butée d'embrayage avec plaque d'appui rapportée. Le manchon de guidage est pourvu d'une partie élastique pouvant se déformer axialement et qui forme une languette de verrouillage. La plaque d'usure est fixée au manchon par un premier mouvement axial qui fait fléchir la languette de verrouillage puis par un mouvement radial qui fait coulisser la plaque d'usure jusqu'à sa position définitive, la languette de verrouillage revient alors en position initiale.

On connaît par le document GB A 1 171 498 l'utilisation d'une sonotrode pour fixer une plaque métallique sur une pièce par échauffement et par déformation de la partie échauffée.

La fixation de la plaque d'appui au moyen de rivets ou de vis peut s'avérer satisfaisante en principe mais présente l'inconvénient d'entraîner un coût pratiquement prohibitif. Les rivets et les vis constituent en effet des pièces supplémentaires et l'opération de fixation est difficilement automatisable.

La présente invention a pour objet la réalisation d'une butée d'embrayage comportant une douille de guidage dans laquelle les problèmes de solidarisation de la plaque d'appui avec la douille de guidage se trouvent résolus d'une manière simple, facilement automatisable, ne mettant pas en oeuvre de pièces de liaison supplémentaires et n'introduisant pas de déformation dans les parties fonctionnelles de la douille et en particulier dans l'alésage de sa partie tubulaire.

L'invention a également pour objet un procédé de fabrication d'une telle douille de guidage avec solidarisation de la plaque d'appui métallique.

Telle que revendiquée la butée d'embrayage comporte un palier à roulement, un organe de montage en matière synthétique, des moyens d'autocentrage et une plaque métallique contre laquelle vient agir un organe de manoeuvre de la butée, la plaque étant fixée sur l'organe de montage par une partie de la matière synthétique de celui-ci. Selon l'invention l'organe de montage comprend une douille de guidage en matière synthétique moulée munie d'une partie tubulaire et d'une collerette radiale, la plaque d'appui métallique présentant un alésage ayant sensiblement le même diamètre que le diamètre extérieur de la dite partie tubulaire sur laquelle ladite plaque d'appui est insérée, et ladite plaque d'appui étant retenue de manière indémontable par la dite partie de matière synthétique faisant saillie de façon que la plaque d'appui soit enserrée entre la collerette radiale et la dite partie de matière synthétique.

Dans un premier mode de réalisation, la partie de matière synthétique peut faire saillie au voisinage d'une des extrémités de la partie tubulaire de la douille de guidage.

Dans un autre mode de réalisation, la partie de matière synthétique peut faire saillie au contraire au voisinage de la périphérie de la collerette radiale.

La partie de matière synthétique peut faire saillie dans plusieurs zones localisées, réparties à la périphérie de la partie tubulaire de la douille de guidage ou au contraire sur toute la périphérie de ladite partie tubulaire.

Dans un autre mode de réalisation, la partie de matière synthétique peut faire saillie dans plusieurs zones localisées, réparties à la périphérie de la collerette radiale de la douille de guidage.

Selon encore un autre mode de réalisation, la collerette radiale peut présenter au moins un pion en saillie traversant un trou aménagé dans la plaque d'appui métallique, l'échauffement et la déformation plastique pouvant alors être effectués sur le ou lesdits pions.

Pour assurer le guidage radial du palier à roulement lors de l'autocentrage, la bague non toumante du palier à roulement présente généralement une portion annulaire radiale, en contact de frottement avec une portion de guidage radiale de la douille de guidage.

Dans un mode de réalisation avantageux de l'invention, la portion de guidage est disposée parallèlement à la collerette radiale de la douille de guidage.

Ce mode de réalisation est particulièrement avantageux lorsque la solidarisation de la plaque d'appui métallique sur la collerette radiale se fait, comme indiqué précédemment, au moyen de pions en saillie traversant des trous de la plaque d'appui métallique. Le fait en effet d'utiliser pour le guidage radial du palier à roulement une portion de guidage indépendante de la collerette radiale permet d'éviter toute difficulté qui pourrait résulter d'une éventuellement déformation locale de la collerette radiale lors de l'échauffement et de la déformation des pions de fixation.

Dans un autre mode de réalisation, le guidage du palier à roulement peut être réalisé par contact de frottement de la bague non tournante du palier à roulement sur la face de la plaque d'appui métallique opposée à celle contre laquelle vient agir l'organe de manoeuvre.

En variante, la portion de guidage de la douille est intégrée à la collerette radiale, la face de ladite collerette opposée à la plaque d'appui servant alors de face d'appui et de guidage pour la bague non tournante du palier à roulement.

Le procédé de fabrication de l'invention, permet la réalisation d'une douille de guidage, destinée à recevoir un palier à roulement pour former une butée d'embrayage. Selon l'invention, la douille de guidage est munie d'une partie tubulaire et d'une collerette radiale adaptée pour recevoir une plaqué d'appui métallique. La douille de guidage est tout d'abord moulée en une matière synthétique. Un logement approprié est prévu sur la douille de guidage pour recevoir la plaque d'appui. La plaque d'appui métallique, est alors introduite dans le logement précité, jusqu'à venir en contact avec au moins des parties de la collerette radiale de la douille de guidage,
et insérée autour de la partie tubulaire, l'alésage de la plaque ayant sensiblement le même diamètre que le diamètre extérieur de ladite partie tubulaire, et étant alors introduit sur l'extrémité de la partie tubulaire de la douille de guidage.

La plaque d'appui métallique est ensuite fixée sur la douille de guidage, par échauffement local de la matière synthétique de la douille de guidage moulée, cet échauffement étant obtenu au moyen d'une sonotrode qui provoque des vibrations à haute fréquence entraînant l'apparition de frictions au niveau moléculaire. La matière synthétique se trouve donc ramollie localement par l'action de la sonotrode. On procède ensuite ou simultanément à une déformation plastique des parties échauffées ramollies, et la plaque d'appui métallique se trouve enserrée entre la collerette radiale et la saillie formée par la partie déformée.

Ce logement peut présenter, par exemple, la forme d'une empreinte creuse pratiquée sur la collerette radiale de la douille de guidage, les bords de ladite empreinte coopérant avec au moins une partie des bords de la plaque d'appui pour empêcher la rotation de cette dernière.

De préférence, la déformation plastique est réalisée au moyen de la sonotrode elle-même, qui présente à cet effet un profil adapté aux déformations que l'on souhaite réaliser.

L'invention sera mieux comprise à l'étude de la description détaillée de quelques modes de réalisation pris à titre d'exemples nullement limitatifs et illustrés par les dessins annexés sur lesquels :
la figure 1 est une demi-coupe en élévation d'une butée d'embrayage selon l'invention selon I-I de la figure 2;
la figure 2 est une vue extérieure de la butée d'embrayage de la figure 1;
la figure 3 est une demi-coupe en élévation d'une douille de guidage selon un autre mode de réalisation de l'invention selon III-III de la figure 4;
la figure 4 est une vue extérieure de côté de la douille de guidage de la figure 1;
la figure 5 est une demi-coupe en élévation d'un autre mode de réalisation d'une douille de guidage de l'invention selon V-V de la figure 6;
la figure 6 est une vue en coupe selon VI-VI de la figure 5;
la figure 7 est une demi-vue en coupe en élévation d'un autre mode de réalisation d'une douille de guidage de l'invention selon VII-VII de la figure 8;
la figure 8 est une vue extérieure de la douille de guidage de la figure 7;
les figures 9, 10 et 11 illustrent en demi-coupe en élévation les différentes étapes du procédé de l'invention adaptées à un autre mode de réalisation de douille de guidage selon l'invention;
la figure 12 est une vue extérieure de la douille de guidage terminée de la figure 11;
les figures 13 et 14 illustrent la mise en oeuvre du procédé de l'invention sur une douille de guidage selon un autre mode de réalisation de l'invention représenté en demi-coupe en élévation.

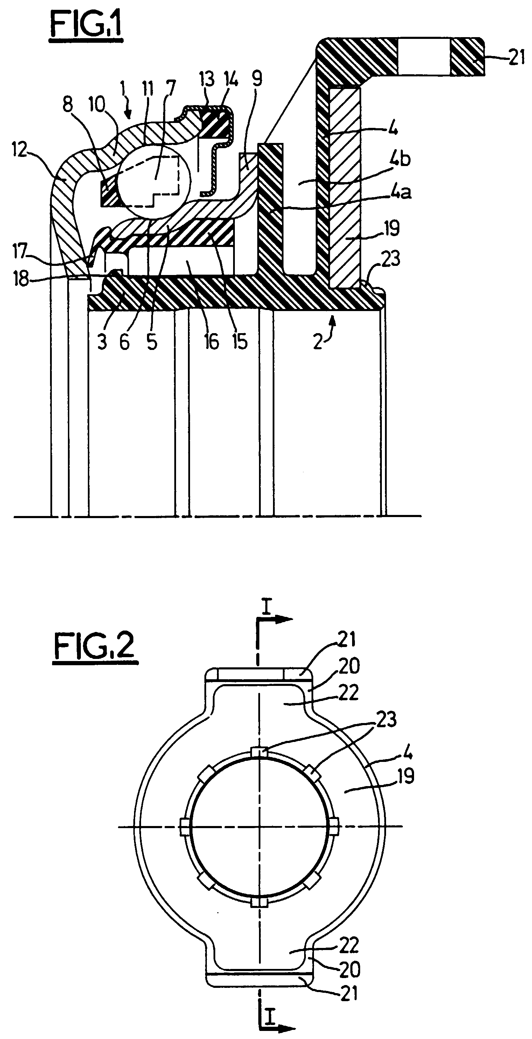

Telle qu'elle est illustrée sur les figures 1 et 2, la butée d'embrayage conforme à l'invention, comporte un palier à roulement 1 monté sur une douille de guidage 2 laquelle comporte une portion tubulaire 3 qui peut coulisser par rapport à un tube-guide (non représenté sur la figure) et une collerette radiale 4. La douille de guidage 2 est réalisée par moulage d'une matière synthétique rigide additionnée de charges minérales ou analogues.

Le palier à roulement 1 comporte une bague intérieure 5 à paroi mince, réalisée par emboutissage d'une tôle ou d'un tube présentant un chemin de roulement torique 6, pour une rangée de billes 7, maintenues dans une capable 8. La bague intérieure 5 non tournante comporte également une prolongation annulaire dirigée vers l'extérieur sous la forme d'une collerette radiale 9, qui vient en contact de frottement avec la surface frontale intérieure d'une portion de guidage radiale 4a, se présentant sous la forme d'une collerette annulaire parallèle à la collerette radiale 4, et reliée à cette dernière par une pluralité de nervures de renforcement 4b.

Le palier à roulement 1 se complète par une bague extérieure 10, également à paroi mince, réalisée par emboutissage d'une tôle ou d'un tube, qui présente un chemin de roulement torique 11 pour les billes 7 ainsi qu'une portion torique 12 qui peut venir en contact avec la surface du diaphragme d'un dispositif d'embrayage non représenté sur la figure lors du déplacement axial de l'ensemble de la butée par rapport au tube-guide sur lequel coulisse la douille de guidage 2. La palier à roulement 1 est protégé par un flasque de protection 13 fixé sur la bague extérieure 10 avec interposition d'un joint souple d'étanchéité 14.

Un manchon en matière élastique 15, par exemple en élastomère ou en caoutchouc naturel, est disposé à l'intérieur de la bague interne 5 et présente une pluralité de nervures 16 parallèles à l'axe de la butée, dirigées vers l'intérieur et dont le bord libre interne entre en contact avec la surface extérieure de la portion cylindrique 3 de la douille de guidage 2. Le manchon élastique 15 présente une lèvre annulaire 17 qui assure l'étanchéité du palier à roulement 1 en entrant en contact avec la bague extérieure 10. Une nervure annulaire 18 venue de moulage avec la douille de guidage 2 et disposée à l'extrémité de la portion cylindrique 3 assure le maintien du palier 1 sur la douille de guidage 2 avant le montage sur le tube-guide.

Une plaque d'appui métallique 19 réalisée en acier qui a de préférence subi un traitement thermique de durcissement superficiel, sert de surface de contact pour un organe de manoeuvre de la butée non représenté sur les figures et qui exerce un effort en direction axiale pour provoquer le déplacement de la butée dans son ensemble par rapport au tube-guide lors d'une opération de débrayage. Comme on peut le voir en particulier sur la figure 2, la collerette radiale 4 comporte deux prolongations diamètralement opposées 20 qui se poursuivent axialement sous la forme de deux oreilles 21 dont l'une est visible sur la figure 1. La plaque d'appui 19 comporte des prolongations diamètralement opposées correspondantes 22. De cette manière les deux doigts d'un organe de manoeuvre en forme de fourche viennent en contact sur la surface de la plaque d'appui 19 et peuvent être maintenus au moyen des deux oreilles 21.

La fixation de la plaque métallique 19 contre l'une des surfaces de la collerette radiale 4 se fait, selon l'invention, après la fabrication de la douille de guidage 2 par moulage. Après moulage de la douille de guidage 2 celle-ci ne comporte pas en effet les crans de fixation 23 visibles sur les figures 1 et 2 et pratiqués ultérieurement au voisinage du bord périphérique de la partie tubulaire 3.

Dans ces conditions, la plaque métallique 19 peut être insérée autour de la partie tubulaire 3, l'alésage de la plaque 19 ayant sensiblement le même diamètre que le diamètre extérieur de ladite partie tubulaire 3.

Pour assurer alors la fixation dans cette position de la plaque d'appui 19, on procède à un échauffement local de la matière synthétique de la douille de guidage 2, suivi d'une déformation plastique des parties échauffées de façon à former les différents crans de fixation 23 qui sont répartis de manière sensiblement égale à la périphérie de la partie tubulaire 3. Après refroidissement les crans 23 maintiennent en place la plaque métallique 19.

Selon l'invention, l'échauffement local est réalisé au moyen d'une sonotrode créant localement des vibrations à haute fréquence provoquant des agitations et des frictions au niveau moléculaire qui entraînent un ramollissement de la matière synthétique. De préférence, le profil de la sonotrode est tel qu'une poussée de cette dernière entraîne le refoulement de la matière synthétique ramollie et la formation des crans de fixation 23.

Bien entendu, la douille de guidage 2 comporte, en sortie de moulage, les réserves de matière nécessaires à la formation ultérieure de ces crans de fixation 23, de sorte que la forme définitive leur est imprimée par l'extrémité de la sonotrode.

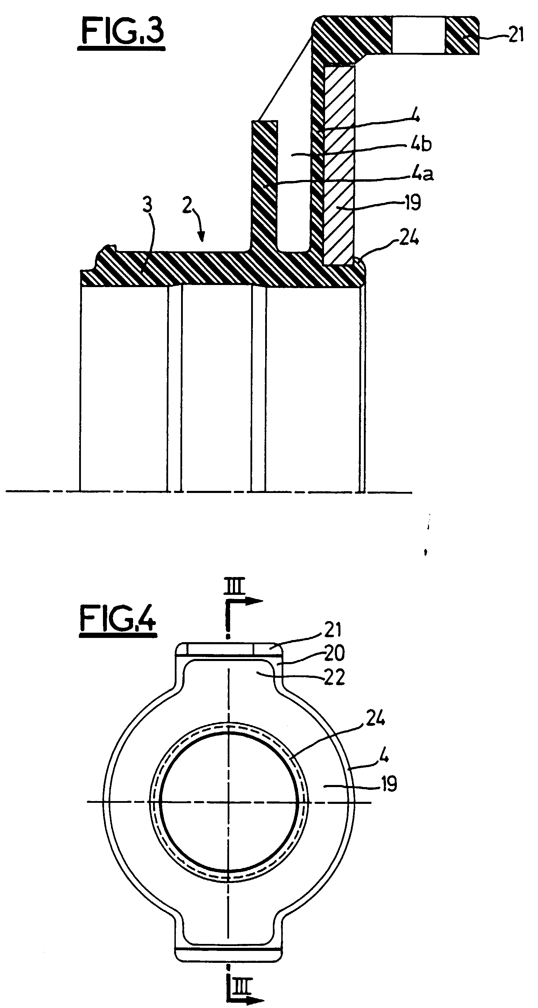

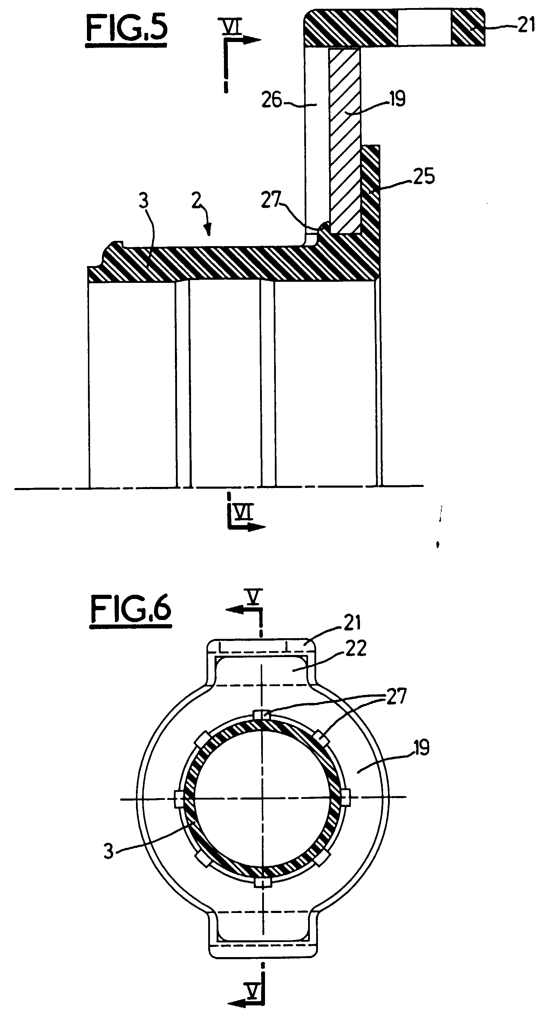

Le mode de réalisation des figures 3 et 4 sur lesquelles les pièces identiques portent les mêmes références, se différencie uniquement du mode de réalisation des figures 1 et 2, par le fait que la fixation de la plaque d'appui métallique 19 est faite ici non plus par des crans individuels 23 localisés à la périphérie de la partie tubulaire 3 mais par un cordon continu 24 repoussé par la sonotrode et occupant toute la périphérie annulaire de l'extrémité de la partie tubulaire 3.

Dans le mode de réalisation illustré sur les figures 5 et 6, la portion tubulaire 3 de la douille de guidage 2, comporte à son extrémité opposée au palier à roulement 1 une portion annulaire radiale 25. La plaque d'appui 19 est cette fois introduite sur la partie tubulaire 3 depuis la zone qui est destinée à être ultérieurement occupée par le palier à roulement 1. La plaque d'appui 19 vient en contact avec la zone d'appui radiale 25. Dans ce mode de réalisation la collerette radiale 4 comporte donc une ouverture 26 pour le passage de la plaque d'appui 19. La fixation de la plaque d'appui 19 est assurée par la formation d'une pluralité de crans de fixation 27 pratiqués sur la périphérie extérieure de la portion annulaire 3 du côté recevant ultérieurement le palier à roulement 1. Comme on peut le voir sur la figure 5 la plaque d'appui 19 se trouve donc enserrée entre la zone d'appui radiale 25 et les différents crans de fixation 27 lesquels sont répartis sur toute la périphérie comme le montre la figure 6. On notera que dans ce mode de réalisation la bague interne 5 du palier à roulement 1, qui n'est pas représentée sur la figure 5, vient en contact d'appui direct avec la plaque métallique 19 sur la face de celle-ci qui est opposée à la face en contact avec l'organe de manoeuvre de la butée.

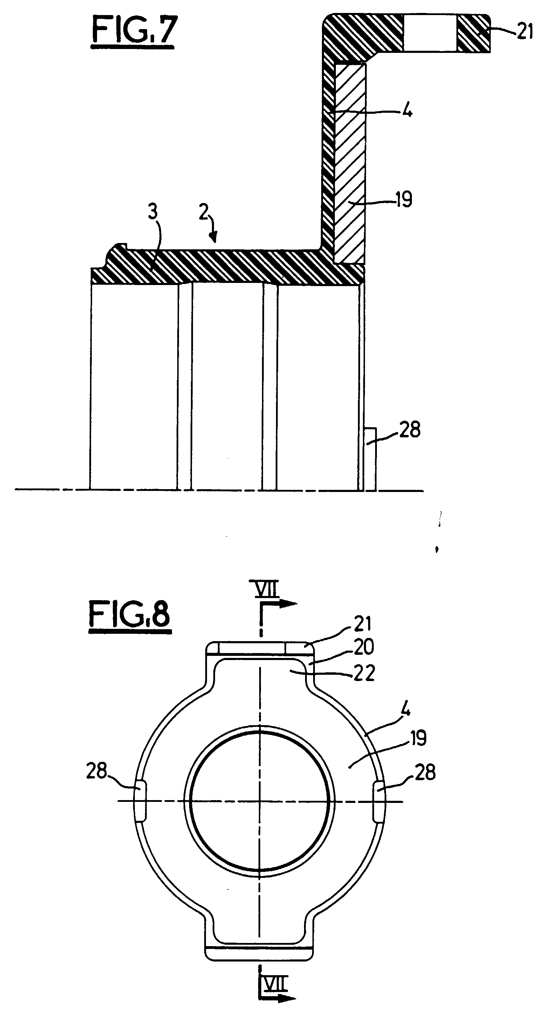

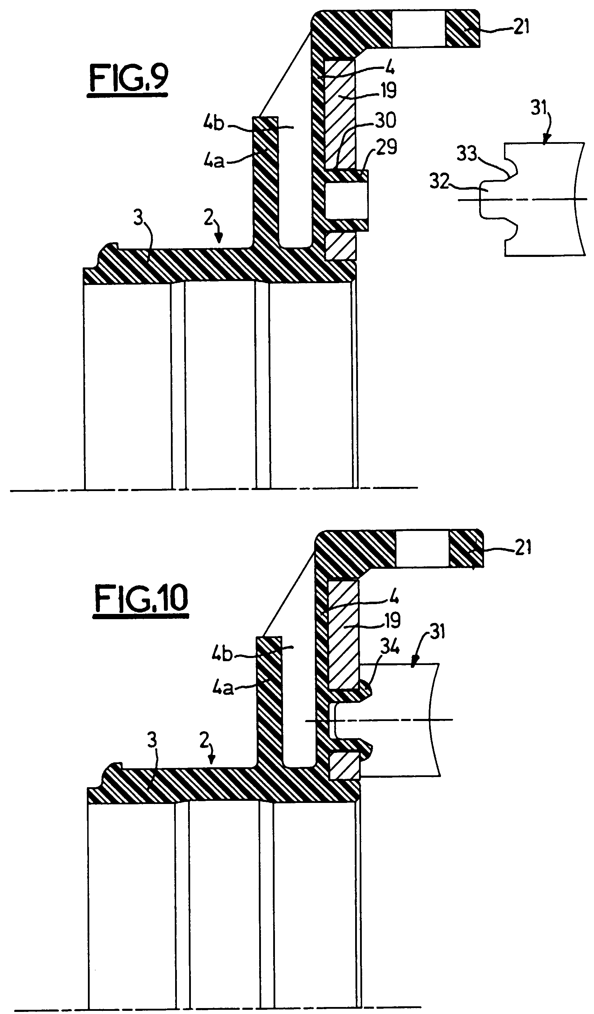

Dans le mode de réalisation des figures 7 et 8, la fixation de la plaque d'appui 19 est faite au moyen de deux portions repoussées 28 diamètralement opposées pratiquées à la périphérie de la collerette radiale 4 et décalées à 90° environ par rapport aux prolongations 20. La portion de guidage radiale 4a a été supprimée, la face de là collerette radiale 4 opposée à la plaque d'appui métallique 19 servant directement de face d'appui et de guidage radial pour la bague non tournante du palier à roulement de structure similaire à celui qui est illustré sur la figure 1.

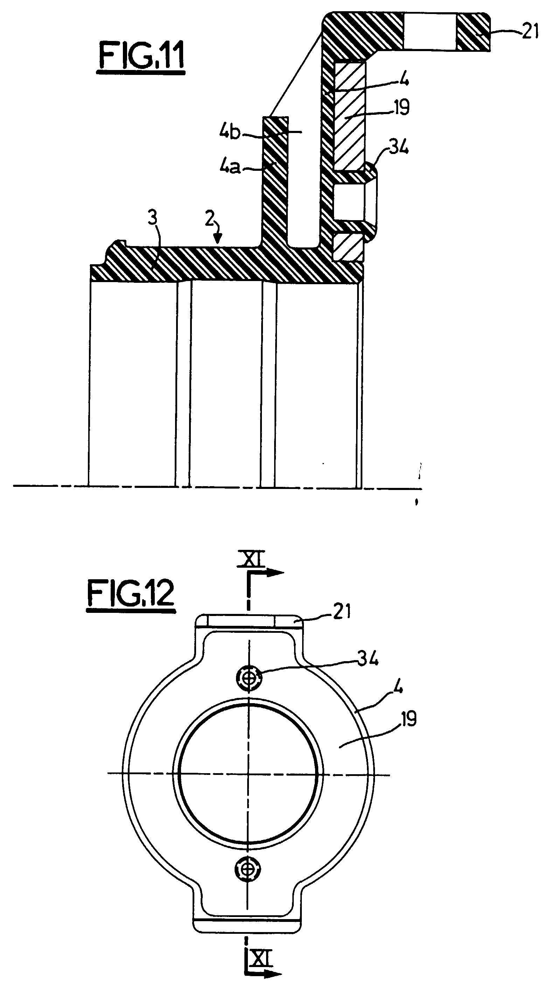

Dans le mode de réalisation des figures 9 à 12, la fixation de la plaque métallique 19 est réalisée au moyen de deux pions 29 faisant saillie à partir de la collerette radiale 4 et traversant des trous 30 aménagés dans la plaque d'appui métallique 19. Les pions 29 sont réalisés sous la forme de trous borgnes. Pour la fixation de la plaque d'appui 19 on utilise une sonotrode 31 visible sur les figures 9 et 10 comportant une partie en saillie 32 capable de pénétrer dans les trous borgnes des pions 29 et une gorge périphérique 33 entourant la saillie 32.

Lorsque la douille de guidage 2 vient de moulage, l'épaisseur axiale des pions 29 est supérieure à celle de la plaque métallique 19. L'action de la sonotrode est visible en particulier sur la figure 10 : lorsque la matière synthétique des pions 29 est suffisamment ramollie par l'échauffement, la poussée dans le sens axial de la sonotrode 31 provoque la déformation du bord périphérique du trou borgne du pion 29 assurant ainsi une bordure de fixation 34 de la plaque métallique 19 à l'endroit de chacun des pions 29. La douille de guidage 2 équipée de sa plaque métallique 19 est visible sur les figures 11 et 12.

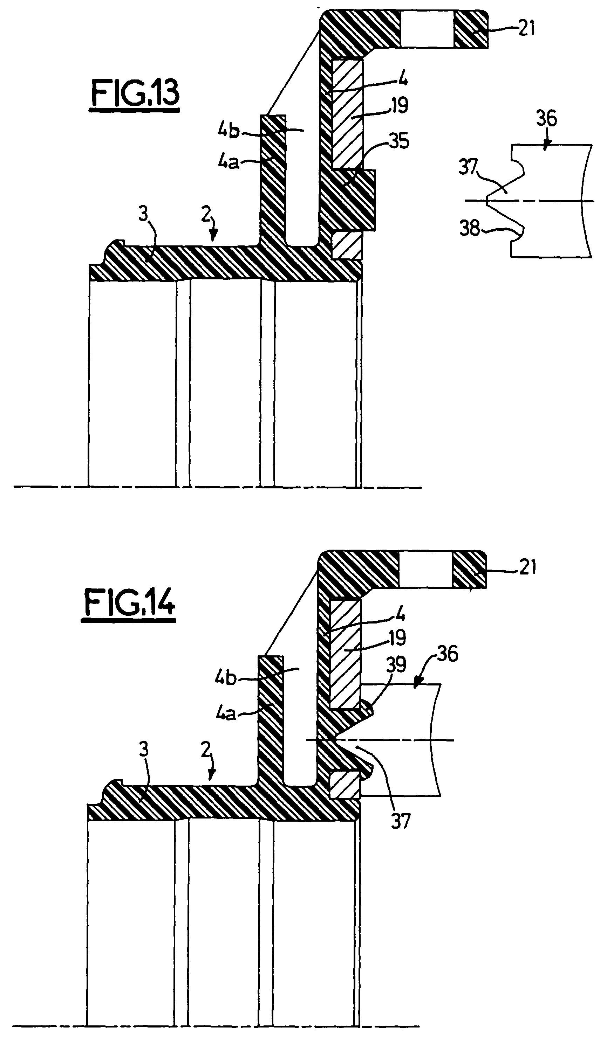

Dans le mode de réalisation illustré sur les figures 13 et 14 les pions 35 destinés à la fixation de la plaque 19 sont pleins. La sonotrode 36 présente une partie centrale en forme de coin 37 entourée par une gorge annulaire 38. L'action de la sonotrode 36 est visible sur la figure 14 : après échauffement de la matière du pion 35 le coin 37 peut pénétrer dans le pion 35 en repoussant la matière ramollie jusque dans la gorge périphérie 38 formant ainsi une bordure en saillie 39 qui retient la plaque métallique 19.

## Revendications

1. Butée d'embrayage comportant un palier à roulement (1), un organe de montage en matière synthétique, des moyens d'autocentrage (15) et une plaque métallique (19) contre laquelle vient agir un organe de manoeuvre de la butée, la plaque étant fixée sur l'organe de montage par une partie de la matière synthétique de celui-ci, caractérisée par le fait que l'organe de montage comprend une douille de guidage (2) en matière synthétique moulée munie d'une partie tubulaire (3) et d'une collerette radiale (4), la plaque d'appui métallique (19) présentant un alésage ayant sensiblement le même diamètre que le diamètre extérieur de la dite partie tubulaire (3) sur laquelle ladite plaque d'appui (19) est insérée, et ladite plaque d'appui (19) étant retenue de manière indémontable par la dite partie de matière synthétique faisant saillie de façon que la plaque d'appui (19) soit enserrée entre la collerette radiale (4) et la dite partie de matière synthétique.

2. Butée d'embrayage selon la revendication 1, caractérisée par le fait que ladite partie de matière synthétique fait saillie au voisinage d'une des extrémités de la partie tubulaire (3) de la douille de guidage (2).

3. Butée d'embrayage selon la revendication 2, caractérisée par le fait que ladite partie de matière synthétique fait saillie dans plusieurs zones localisées (23, 27) réparties à la périphérie de la partie tubulaire de la douille de guidage.

4. Butée d'embrayage selon la revendication 2, caractérisée par le fait que ladite partie de matière synthétique fait saillie sur toute la périphérie (24) de la partie tubulaire (3) de la douille de guidage (2).

5. Butée d'embrayage selon la revendication 1 caractérisée par le fait que ladite partie de matière synthétique fait saillie dans plusieurs zones localisées (28) réparties à la périphérie de la collerette radiale (4) de la douille de guidage.

6. Butée d'embrayage selon la revendication 1, caractérisée par le fait que la collerette radiale (4) présente au moins un pion en saillie (29, 35 traversant un trou aménagé dans la plaque d'appui métallique (19) ladite partie de matière synthétique fait saillie sur le ou lesdits pions.

7. Butée d'embrayage selon l'une quelconque des revendications précédentes, caractérisée par le fait que la bague (5) non tournante du palier à roulement présente une portion annulaire radiale (9) en contact de frottement avec une portion de guidage radiale (4a) de la douille de guidage (2) ladite portion de guidage étant disposée parallèlement à la collerette radiale (4) de la douille de guidage (2).

8. Butée d'embrayage selon l'une quelconque des revendications 1 à 6, caractérisée par le fait que la bague (5) non tournante du palier à roulement présente une portion annulaire radiale (9) en contact de frottement avec une portion de guidage radiale de la douille de guidage (2), ladite portion de guidage étant constituée par la face de la collerette radiale (4) de la douille de guidage (2) opposée à la plaque d'appui métallique (19).

9. Butée d'embrayage selon l'une quelconque des revendications 1 à 6, caractérisée par le fait que la bague (5) non tournante du palier à roulement (1) présente une portion annulaire radiale en contact de frottement avec la face de la plaque d'appui métallique (19) opposée à celle contre laquelle vient agir l'organe de manoeuvre.

10. Procédé de fabrication d'une douille de guidage destinée à recevoir un palier à roulement pour former une butée d'embrayage, caractérisé par le fait que la douille de guidage (2), étant munie d'une partie tubulaire (3) et d'une collerette radiale (4) adaptée pour recevoir une plaque d'appui métallique (19), est tout d'abord moulée en une matière synthétique, un logement approprié étant prévu pour la plaque d'appui (19) ; puis la plaque d'appui (19) est introduite dans ledit logement et insérée autour de la partie tubulaire (3), l'alésage de la plaque (19) ayant sensiblement le même diamètre que le diamètre extérieur de ladite partie tubulaire (3), et vient en contact avec au moins des parties de la collerette radiale (4) ; la plaque d'appui métallique (19) est ensuite fixée sur la douille de guidage (2) par échauffement local de la matière synthétique de la douille de guidage (2) au moyen d'une sonotrode et déformation plastique de la partie échauffée, et se trouve enserrée entre la collerette radiale (4) et la saillie formée par la partie déformée.

11. Procédé selon la revendication 10, caractérisé par le fait que la déformation plastique est faite au moyen de la sonotrode elle-même.

12. Procédé selon les revendications 10 ou 11, caractérisé par le fait que le logement est réalisé sous la forme d'une empreinte creuse pratiquée sur la collerette radiale (4), les bords de ladite empreinte étant capables de coopérer avec au moins une partie des bords de la plaque d'appui métallique afin d'immobiliser celle-ci en rotation.

## Patentansprüche

1. Kupplungsausrücker mit einem Wälzlager (1), einem Trägerteil aus Kunststoff, Mitteln (15) zur Selbstzentrierung sowie einer Metallplatte (19), auf die ein Betätigungsglied des Ausrückers einwirkt, wobei die Platte auf dem Trägerteil durch einen Teil dessen Kunststoffes befestigt ist, dadurch gekennzeichnet, daß das Trägerteil eine spritzgegossene Führungshülse (2) aus Kunststoff aufweist, die mit einem rohrförmigen Teil (3) und einem radialen Flansch (4) versehen ist, daß die metallische Druckplatte (19) eine Bohrung mit einem Durchmesser aufweist, der im wesentlichen gleich dem Außendurchmesser des rohrförmigen Teils (3) ist, auf welchem die Druckplatte (19) aufgesteckt ist, und daß die Druckplatte (19) unlösbar von dem genannten Teil des Kunststoffes gehalten ist, welcher derart übersteht, daß die Druckplatte (19) zwischen dem radialen Flansch (4) und dem genannten Teil des Kunststoffes eingeschlossen ist.

2. Kupplungsausrücker nach Anspruch 1, dadurch gekennzeichnet, daß der genannte Teil des Kunststoffes nahe bei einem der Enden des rohrförmigen Teiles (3) der Führungshülse (2) übersteht.

3. Kupplungsausrücker nach Anspruch 2, dadurch gekennzeichnet, daß der genannte Teil des Kunststoffes in mehreren auf dem Umfang des rohrförmigen Teiles der Führungshülse verteilten örtlichen Bereichen (23, 27) übersteht.

4. Kupplungsausrücker nach Anspruch 2, dadurch gekennzeichnet, daß der genannte Teil des Kunststoffes auf dem gesamten Umfang (24) des rohrförmigen Teiles (3) der Führungshülse (2) übersteht.

5. Kupplungsausrücker nach Anspruch 1, dadurch gekennzeichnet, daß der genannte Teil des Kunststoffes in mehreren auf dem Umfang des radialen Flansches (4) der Führungshülse verteilten örtlichen Bereichen (28) übersteht.

6. Kupplungsausrücker nach Anspruch 1, dadurch gekennzeichnet, daß der radiale Flansch (4) wenigstens einen vorspringenden Zapfen (29, 35) aufweist, der ein in der metallischen Druckplatte (19) angeordnetes Loch durchsetzt, wobei der genannte Teil des Kunststoffes über den oder die Zapfen übersteht.

7. Kupplungsausrücker nach einem der vorstehenden Ansprüche, dadurch gekennzeichnet, daß der nicht umlaufende Ring (5) des Wälzlagers einen ringförmigen radialen Abschnitt (9) aufweist, der mit einem radialen Führungsteil (4a) der Führungshülse (2) in Reibkontakt steht, wobei der Führungsteil parallel zu dem radialen Flansch (4) der Führungshülse (2) angeordnet ist.

8. Kupplungsausrücker nach einem der Ansprüche 1 bis 6, dadurch gekennzeichnet, daß der nicht umlaufende Ring (5) des Wälzlagers einen ringförmigen radialen Abschnitt (9) aufweist, der mit einem radialen Führungsteil der Führungshülse (2) in Reibkontakt steht, wobei das Führungsteil durch eine der metallischen Druckplatte (19) gegenüberliegende Fläche des radialen Flansches (4) der Führungshülse (2) gebildet ist.

9. Kupplungsausrücker nach einem der Ansprüche 1 bis 6, dadurch gekennzeichnet, daß der nicht umlaufende Ring (5) des Wälzlagers (1) einen ringförmigen radialen Abschnitt aufweist, der mit der Fläche der metallischen Druckplatte (19) in Reibkontakt steht, die derjenigen gegenüberliegt, auf welche das Betätigungsglied einwirkt.

10. Verfahren zur Herstellung einer Führungshülse, die dazu dient, ein Wälzlager aufzunehmen, um einen Kupplungsausrücker zu schaffen, dadurch gekennzeichnet, daß zuerst die Führungshülse (2), die mit einem rohrförmigen Teil (3) und einem zur Aufnahme einer metallischen Druckplatte (19) eingerichteten radialen Flansch (4) versehen ist, aus einem Kunststoff spritzgegossen wird, wobei eine geeignete Aufnahme für die Druckplatte (19) vorgesehen wird; daß dann die Druckplatte (19) in die Aufnahme eingefügt und auf das rohrförmige Teil (3) aufgesetzt, sowie wenigstens an Teilen des radialen Flansches (4) zur Anlage gebracht wird, wobei die Bohrung der Platte (19) ungefähr denselben Durchmesser wie der Außendurchmesser des rohrförmigen Teils (3) aufweist; daß anschließend die metallische Druckplatte (19) durch lokale Erwärmung des Kunststoffes der Führungshülse (2) mittels einer Sonotrode und durch plastische Verformung des jeweiligen erwärmten Teils auf der Führungshülse (2) befestigt und dabei zwischen dem radialen Flansch (4) sowie dem durch den verformten Teil gebildeten Vorsprung eingeschlossen wird.

11. Verfahren nach Anspruch 10, dadurch gekennzeichnet, daß die plastische Verformung mittels der Sonotrode selbst erzeugt wird.

12. Verfahren nach Anspruch 10 oder 11, dadurch gekennzeichnet, daß die Aufnahme in Gestalt einer in dem radialen Flansch (4) ausgebildeten Vertiefung hergestellt wird, wobei der Rand der Vertiefung dazu eingerichtet ist, mit wenigstens einem Teil des Randes der metallischen Druckplatte zusammenzuwirken, um diese drehfest zu haltern.

## Claims

1. Clutch release bearing comprising a roller-contact bearing (1), a mounting member made of synthetic material, self-centring means (15) and a metal plate (19) against which a member for manoeuvring the release bearing comes to act, the plate being fixed on the mounting member by a part of the synthetic material thereof, characterised in that the mounting member comprises a guide bush (2) made of moulded synthetic material equipped with a tubular part (3) and with a radial collar (4), and the metal support plate (19) having a bore having substantially the same diameter as the outside diameter of the said tubular part (3) on which the said support plate (19) is inserted, and the said support plate (19) being retained, in a manner that cannot be dismantled, by the said part of synthetic material projecting so that the support plate (19) is trapped between the radial collar (4) and the said part of synthetic material.

2. Clutch release bearing according to Claim 1, characterised in that the said part of synthetic material projects in the vicinity of one of the ends of the tubular part (3) of the guide bush (2).

3. Clutch release bearing according to Claim 2, characterised in that the said part of synthetic material projects in several localised zones (23, 27) distributed around the perimeter of the tubular part of the guide bush.

4. Clutch release bearing according to Claim 2, characterised in that the said part of synthetic material projects over the entire perimeter (24) of the tubular part (3) of the guide bush (2).

5. Clutch release bearing according to Claim 1, characterised in that the said part of synthetic material projects in several localised zones (28) distributed around the perimeter of the radial collar (4) of the guide bush.

6. Clutch release bearing according to Claim 1, characterised in that the radial collar (4) has at least one projecting peg (29, 35) passing through a hole made in the metal support plate (19), the said part of synthetic material projects [sic] over the said peg or pegs.

7. Clutch release bearing according to any one of the preceding claims, characterised in that the non-rotating ring (5) of the roller-contact bearing has a radial annular portion (9) in frictional contact with a radial guide portion (4a) of the guide bush (2), the said guide portion being arranged parallel to the radial collar (4) of the guide bush (2).

8. Clutch release bearing according to any one of Claims 1 to 6, characterised in that the non-rotating ring (5) of the roller-contact bearing has a radial annular portion (9) in frictional contact with a radial guide portion of the guide bush (2), the said guide portion being composed of the face of the radial collar (4) of the guide bush (2) opposite the metal support plate (19).

9. Clutch release bearing according to any one of Claims 1 to 6, characterised in that the non-rotating ring (5) of the roller-contact bearing (1) has a radial annular portion in frictional contact with the face of the metal support plate (19) opposite that against which the maoeuvring member comes to act.

10. Method of manufacturing a guide bush intended to receive a roller-contact bearing so as to form a clutch release bearing, characterised in that the guide bush (2), being equipped with a tubular part (3) and a radial collar (4) adapted so as to receive a metal support plate (19), is firstly moulded from a synthetic material, an appropriate housing being provided for the support plate (19); then the support plate (19) is introduced into the said housing and inserted around the tubular part (3), the bore of the plate (19) having substantially the same diameter as the outside diameter of the said tubular part (3), and comes into contact with at least parts of the radial collar (4); the metal support plate (19) is then fixed to the guide bush (2) by local heating of the synthetic material of the guide bush (2) by means of a sonotrode and plastic deformation of the heated part, and becomes trapped between the radial collar (4) and the projection formed by the deformed part.

11. Method according to Claim 10, characterised in that the plastic deformation is produced by means of the sonotrode itself.

12. Method according to Claims 10 or 11, characterised in that the housing is made in the shape of a hollow recess made on the radial collar (4), the edges of the said recess being capable of interacting with at least part of the edges of the metal support plate so as to rotationally immobilise the latter.
